# EUROPÄISCHE PATENTSCHRIFT

(11) **EP 1 595 043 B1**
(45) Veröffentlichungstag und Bekanntmachung des Hinweises auf die Patenterteilung: **02.11.2011**
(21) Anmeldenummer: 04711592.8
(22) Anmeldetag: 17.02.2004
(51) Int. Cl.: E05B 1/00, B60R 25/00, B60R 25/04

(54) **SCHLIESSSYSTEM, INSBESONDERE FÜR EIN KRAFTFAHRZEUG**
LOCKING SYSTEM, ESPECIALLY FOR A MOTOR VEHICLE
SYSTEME DE VERROUILLAGE, EN PARTICULIER POUR UN VEHICULE AUTOMOBILE

(30) Priorität: 20.02.2003 DE 10307237
(43) Veröffentlichungstag der Anmeldung: 16.11.2005
(73) Patentinhaber: Marquardt GmbH, 78604 Rietheim-Weilheim (DE)
(72) Erfinder: MÜLLER, Karl, 78628 Rottweil-Neufra (DE); MATTES, Johannes, 78567 Fridingen (DE); HIPP, Uwe, 72514 Inzigkofen-Engelwies (DE); WEISSER, Dietmar, 78532 Tuttlingen (DE); GEBER, Michael, 72574 Bad Urach (DE); RUTHER, Markus, 73760 Ostfildern (DE); POHLMANN, Andreas, 71263 Weil der Stadt (DE); REINHARDT, Matthias, 71067 Sindelfingen (DE)
(74) Vertreter: Otten, Herbert
(86) Internationale Anmeldenummer: PCT/EP2004/001475
(87) Internationale Veröffentlichungsnummer: WO 2004/074604

(56) Entgegenhaltungen:
- EP-A- 0 926 021
- DE-A- 19 645 808

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die mittels elektromagnetischer Wellen arbeiten. Insbesondere bei Kraftfahrzeugen werden solche Schließsysteme als Türschließsysteme für die Zugangsberechtigung und/oder als Zündschlosssysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung, Die beiden Einrichtungen besitzen zu deren bestimmungsgemäßen Betrieb Sendemittel und/oder Empfangsmittel für elektromagnetische Signale mit in einem Frequenzband zwischen zwei Grenzfrequenzen va, vb liegenden Frequenzen v. Im bestimmungsgemäßen Betrieb ist zwischen dem Schlüssel und der Steuereinrichtung wenigstens ein Signal als codiertes Betriebssignal zur Authentikation des Schlüssels übertragbar, so dass nach positiver Auswertung des übertragenen Betriebssignals und damit bei berechtigtem Schlüssel eine Änderung des Zustandes der Steuereinrichtung bewirkbar ist. Ein solches fernbedienbares Schließsystem für die Zentralverriegelung in einem Kraftfahrzeug ist weiterhin in der DE 196 45 808 A1 beschrieben, Bei diesem Schließsystem ist das Frequenzband für die Signal-Übertragung zwischen den beiden Einrichtungen in mehrere Kanäle eingeteilt. Zur Unterdrückung von Störungen wird für die Signal-Übertragung zwischen diesen Kanälen nach einem vorgegebenen Schema gewechselt. Solche Schließsysteme sind auch mit so genannten "Keyless"-Funktionalitäten weiterentwickelt ("schlüssellose Zugangs-/Fahrberechtigungs-Funktionalität"). So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt. Zur Signal-Übertragung zwischen dem Schlüssel und der Steuereinrichtung ist für das jeweilige Schließsystem eine bestimmte Soll-Frequenz vs vorgesehen. Aufgrund von Bauteil-Toleranzen sowie Toleranzen in der Fertigung treten bei den Sendemitteln in den beiden Einrichtungen in der Praxis jedoch Abweichungen von der Soll-Frequenz vs auf. Eine nachträgliche Justierung der beiden Einrichtungen auf die Soll-Frequenz vs ist aufwendig, mit hohen Herstellkosten verbunden und erhöht den Ausschuss.

Außerdem ist bei dem Schlüssel, insbesondere einem kleinbauenden Schlüssel mit Keyless-Funktionalität, eine Justierung auf die Soll-Frequenz vs nicht in allen Fällen möglich. Daher ist es nötig, dass die Empfangsmittel in der Steuereinrichtung den zulässigen Frequenzbereich [va,vb] durchsuchen, und zwar wegen der gewünschten hohen Reichweite für die Signal-Übertragung schmalbandig durchsuchen, um zur Signal-Übertragung dann die tatsächliche Ist-Frequenz vi der Sendemittel des Schlüssels einzustellen. Daraus kann ein erheblicher Zeitbedarf zur Signal-Übertragung resultieren, so dass die Bedienung des Schließsystems vom Benutzer des Kraftfahrzeugs als unkomfortabel empfunden wird.

Das Zeitproblem verschärft sich noch weiter, falls mehrere Schlüssel mit jeweils unterschiedlichen Ist-Frequenzen vi zur selben Steuereinrichtung zugehörig sind. Zudem können sich im Wirkbereich eines mit Keyless-Funktionalitäten ausgestatteten Kraftfahrzeuges mehrere Schlüssel befinden, die zu diesem aber auch zu einem anderen Keyless-Kraftfahrzeug gehören können, wodurch der Zeitbedarf für das Durchsuchen des gesamten zulässigen Frequenzbereichs [va,vb] weiter ansteigt.

Ein Schließsystem mit Keyless-Funktionalität ist aus der gattungsbildenden EP 0 926 021 A2 bekannt. Dieses Schließsystem besitzt ebenfalls eine erste Einrichtung mit Sende- und Empfangsmitteln für elektromagnetische Signale im Kraftfahrzeug sowie eine
tragbare zweite Einrichtung mit Sende- und Empfangsmitteln. Das Frequenzband für die Signal-Übertragung zwischen den beiden Einrichtungen ist in mehrere Kanäle eingeteilt. Die zweite Einrichtung sendet das codierte Betriebssignal in zwei dieser Kanäle, wobei die hierfür verwendeten Kanäle bei der Herstellung der zweiten Einrichtung festgelegt werden. Da sich aufgrund von Drifts die Kanäle verändern können, durchsucht das Empfangsmittel in der ersten Einrichtung bei der Signal-Übertragung wiederum alle Kanäle des Frequenzbandes, was den Zeitbedarf für die Signal-Übertragung entsprechend erhöht.

Der Erfindung liegt hiervon ausgehend die Aufgabe zugrunde, das Schließsystem, das insbesondere mit Keyless-Funktionalität ausgestattet ist, derart weiterzuentwickeln, dass der Zeitbedarf für die Signal-Übertragung, insbesondere unter Verzicht auf eine nachträgliche Justierung auf die Soll-Frequenz vs, verringert ist.

Diese Aufgabe wird bei einem gattungsgemäßen Schließsystem durch die kennzeichnenden Merkmale des Anspruchs 1 gelöst.

Beim erfindungsgemäßen Schließsystem wird die tatsächliche Ist-Frequenz vi, mit der das Sendemittel der zweiten Einrichtung betrieben wird, bei der Initialisierung des Schließsystems ermittelt. Diese Ist-Frequenz vi ist in einem Speichermittel der ersten Einrichtung abgespeichert. Dadurch kann die Ist-Frequenz vi gezielt in der ersten Einrichtung zur Signal-Übertragung eingestellt werden, womit das Durchsuchen des gesamten zulässigen Frequenzbereichs [va,vb] überflüssig ist. Weitere Ausgestaltungen der Erfindung sind Gegenstand der Unteransprüche.

Es bietet sich an, die Initialisierung nach Einbau des Schließsystems bei der Herstellung des Kraftfahrzeugs vorzunehmen. Hierfür ist dann lediglich ein geringer Zusatzaufwand notwendig. Die Ermittlung und Abspeicherung der Ist-Frequenz vi lässt sich während der Initialisierung bei der erstmaligen Authentikation der zweiten Einrichtung sogar automatisch durchführen.

Um eine nachträgliche Veränderung der Ist-Frequenz vi, die beispielsweise aufgrund von Alterungsprozessen auftreten kann, zu berücksichtigen, kann die Ist-Frequenz vi des Sendemittels in der zweiten Einrichtung während des Betriebs des Schließsystems in der Art eines Frequenzabgleichs bei Bedarf neu ermittelt werden. Der Einfachheit halber kann die Neuermittlung in periodischen Abständen, beispielsweise bei der Inspektion des Kraftfahrzeugs, nach Ablauf einer festgelegten Betriebsdauer des Kraftfahrzeugs o. dgl., vorgenommen werden. Die neu ermittelte Ist-Frequenz vi' wird anschließend anstelle der bisherigen Ist-Frequenz vi im Speichermittel der ersten Einrichtung abgespeichert.

In der Regel besitzt der Benutzer Zweit- und/oder Ersatz-Schlüssel für das Schließsystem, so daß zu einer ersten Einrichtung mehrere zweite Einrichtungen zugehörig sind. Zweckmäßigerweise werden dann die jeweiligen Ist-Frequenzen vi der zugehörigen zweiten Einrichtungen ermittelt und im Speichermittel der ersten Einrichtung abgespeichert. Die Speicherung der Ist-Frequenzen vi kann in der Art einer Tabelle erfolgen. Dadurch entfällt das bisherige Durchsuchen des gesamten Frequenzbereichs für jede der zugehörigen zweiten Einrichtungen beim Betrieb des Schließsystems, so daß der Zeitbedarf bis zur Reaktion des Schließsystems wesentlich reduziert ist.

Zum effektiven Betrieb des Schließsystems werden bei Beginn der Signal-Übertragung von der zweiten Einrichtung auf die erste Einrichtung zunächst im Empfangsmittel der ersten Einrichtung nacheinander die gespeicherten Ist-Frequenzen vi für die Sendemittel der zugehörigen zweiten Einrichtungen eingestellt. Im Falle daß eine zugehörige weite Einrichtung erkannt wird, wird die Signal-Übertragung mit der dann im Empfangsmittel der ersten Einrichtung eingestellten Ist-Frequenz vi fortgesetzt. Nur für den Fall daß keine zugehörige zweite Einrichtung erkannt wird, was beispielsweise aufgrund einer noch nicht berücksichtigten Veränderung der Ist-Frequenz vi auftreten kann, wird anschließend das gesamte Frequenzband [va,vb] nach einer zugehörigen zweiten Einrichtung durchsucht. Damit bleibt das Schließsystem auch in einem solchen ungünstigen Fall noch funktionsfähig.

Als Speichermittel zur Abspeicherung der Ist-Frequenz vi bietet sich ein nichtflüchtiger Speicher an. Um eine spätere Veränderung der abgespeicherten Werte zu gestatten, beispielsweise nach Neuermittlung der Ist-Frequenz vi', handelt es sich bevorzugterweise um einen überschreibbaren Speicher. Geeignet als Speicher sind zum Beispiel ein EEPROM oder ein Flashspeicher.

Die mit der Erfindung erzielten Vorteile bestehen insbesondere darin, daß weder eine nachträgliche Justierung der Sendemittel in der zweiten Einrichtung noch die Verwendung besonders genauer und dadurch von teueren Bauteilen erforderlich ist. Somit wird eine erhebliche Kosteneinsparung für das Schließsystem realisiert. Außerdem wird ein geringerer Zeitbedarf für die Signal-Übertragung als bisher benötigt, was eine Komfort-Steigerung für den Benutzer des Schließsystems bedeutet. Eine derartige Verkürzung der Reaktionszeit des Schließsystems ist vor allem bei einem Schließsystem mit Keyless-Funktionalität für dessen Akzeptanz durch den Benutzer förderlich.

Ein Ausführungsbeispiel der Erfindung mit verschiedenen Weiterbildungen und Ausgestaltungen ist in den Zeichnungen dargestellt und wird im folgenden näher beschrieben. Es zeigen
Fig. 1 ein mit einem Schließsystem ausgestattetes Kraftfahrzeug,
Fig. 2 ein schematisches Blockschaltbild für das Schließsystem und
Fig. 3 ein schematisches Blockschaltbild der ersten und zweiten Einrichtung mit einem Diagramm zur Übertragung der Signale.

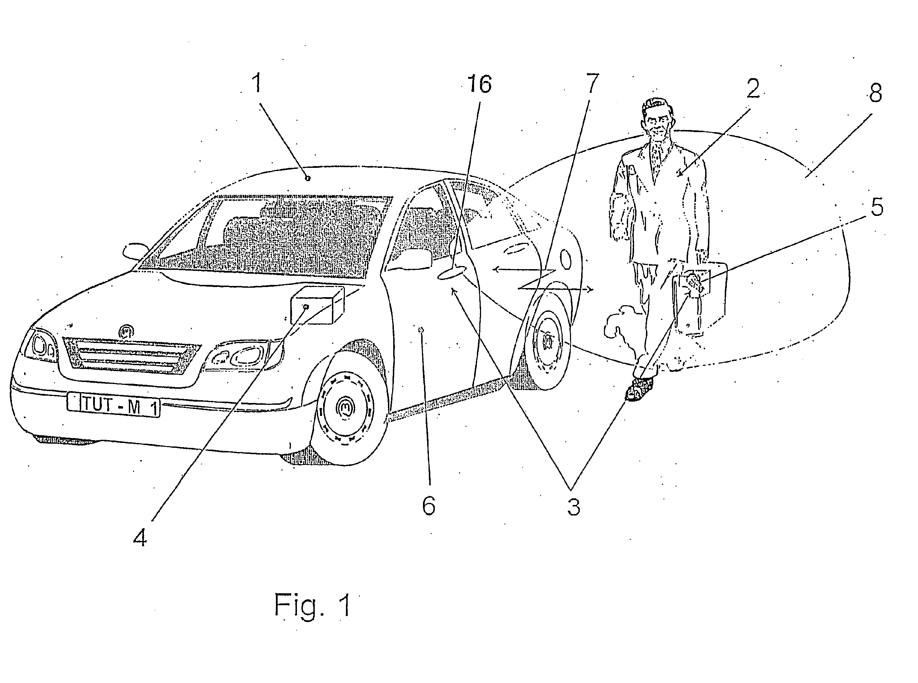

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

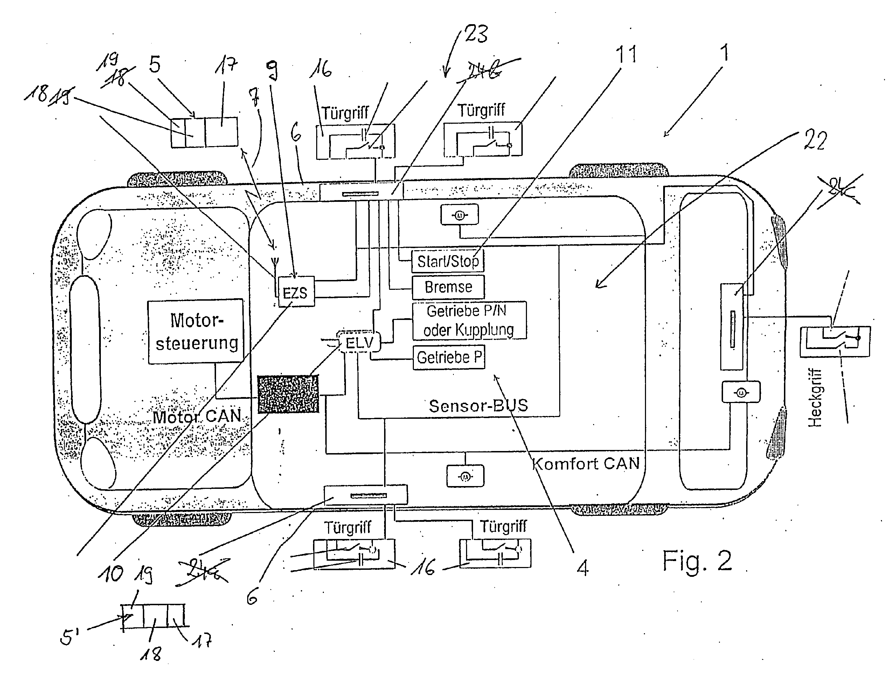

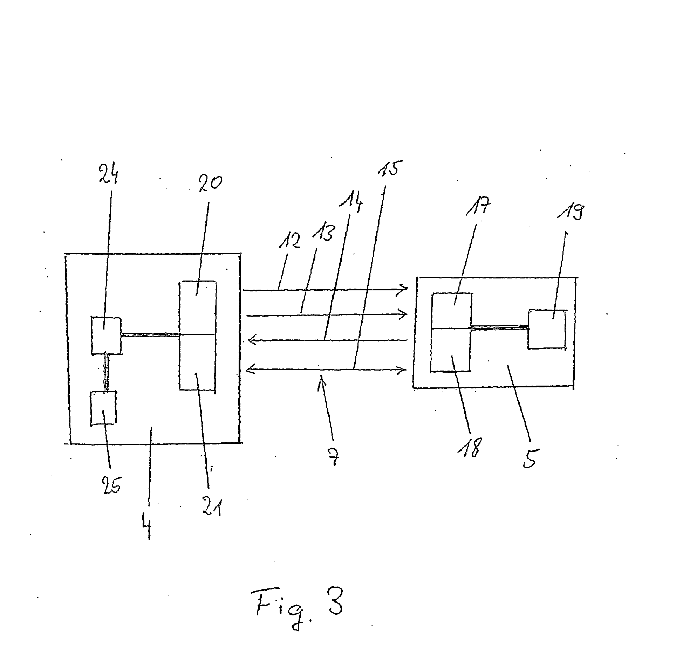

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Sendemittel und/oder Empfangsmittel für elektromagnetische Signale 7, wobei die Sende- und/oder Empfangsmittel mit in einem Frequenzband zwischen zwei Grenzfrequenzen va, vb liegenden Frequenzen *v* arbeiten. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der sich im Außenraum 23 (siehe Fig. 2) des Kraftfahrzeugs 1 befindliche, berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 oder der Lenkradverriegelung 10, die in Fig. 2 zu sehen sind. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Innenraum 22 des Kraftfahrzeugs 1 befindet und einen Start/Stop-Schalter 11 betätigt. Dadurch wird der Start-Vorgang o. dgl. des Kraftfahrzeugs 1 entsprechend der KeylessGo-Funktionalität ausgelöst.

Die Funktionsweise des erfindungsgemäßen Schließsystems 3 soll nun anhand der Fig. 3 näher erläutert werden. Nach Betätigung des Türgriffs 16 oder des Start-Stop-Schalters 11 sendet die erste Einrichtung 4 zunächst ein als Wecksignal bezeichnetes elektromagnetisches Signal 12 für die zugehörige zweite Einrichtung 5. Dadurch wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 im Außenraum 23 des Kraftfahrzeugs 1 sowie gegebenenfalls an welcher Stelle und/oder im Innenraum 22 des Kraftfahrzeugs 1 befindlich ist. Nachfolgend sendet die zweite Einrichtung 5 ein die Information zum ermittelteten Standort beinhaltendes weiteres Signal 14 zur ersten Einrichtung 4, das im folgenden auch als Rückantwortsignal bezeichnet ist. Schließlich wird dann, wie bereits beschrieben, das codierte elektromagnetische Betriebssignal 15 zur Authentikation zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die beiden Einrichtungen 4, 5 sind als schematisches Blockschaltbild ebenfalls in Fig. 3 gezeigt. Die zweite Einrichtung 5 weist ein Sendemittel 17 und/oder ein Empfangsmittel 18 für elektromagnetische Signale sowie eine beispielsweise aus einem Mikrocomputer bestehende Logikschaltung 19 auf. Die Logikschaltung 19 steuert die Sende- und Empfangsmittel 17, 18 zur Übertragung der Signale 7 entsprechend dem beschriebenen Ablauf und führt deren Auswertung durch. Ebenso besitzt die erste Einrichtung 4 Sendemittel 20 und/oder Empfangsmittel 21 sowie eine beispielsweise aus einem Mikrocomputer bestehende Logikschaltung 24 zur Übertragung und Auswertung der Signale 7. Weiter sind Speichermittel 25 in der ersten Einrichtung 4 angeordnet. Aufgrund von Toleranzen in der Fertigung kann die tatsächliche Ist-Frequenz vi, mit der das Sendemittel 17 der zweiten Einrichtung 5 betrieben wird, von der an sich gewünschten Soll-Frequenz vs abweichen und innerhalb des zulässigen Frequenzbandes [va,vb] liegen. Erfindungsgemäß ist nun die Ist-Frequenz vi des Sendemittels 17 der zweiten Einrichtung 5 in dem Speichermittel 25 der ersten Einrichtung 4 abgespeichert. Dadurch kann die Ist-Frequenz vi im Empfangsmittel 21 der ersten Einrichtung 4 gezielt eingestellt werden, womit sich ein Durchsuchen des gesamten Frequenzbandes [va,vb] erübrigt. Als Speichermittel 25 zur Abspeicherung der Ist-Frequenz vi ist ein nichtflüchtiger sowie gegebenenfalls überschreibbarer Speicher, beispielsweise ein EEPROM, ein Flashspeicher o. dgl., zweckmäßig.

Es bietet sich an, die tatsächliche Ist-Frequenz vi des Sendemittels 17 in der zweiten Einrichtung 5 bei der Initialisierung des Schließsystems 3 zu ermitteln. Die Initialisierung, bei der unter anderem die Codierung für die zusammengehörende erste und zweite Einrichtung 4, 5 festgelegt wird, erfolgt nach Einbau des Schließsystems 3 in das Kraftfahrzeug 1 bei dessen Herstellung. Während der Initialisierung wird dann die tatsächliche Ist-Frequenz vi des Sendemittels 17 im Speichermittel 25 abgespeichert. Durch entsprechende Ansteuerung mittels der Logikschaltungen 18, 19 kann die Initialiserung automatisch bei der erstmaligen Authentikation der zweiten Einrichtung 5 erfolgen.

Während der Lebensdauer des Kraftfahrzeuges 1 können Alterungsprozesse in den Bauteilen des Schließsystems 3 auftreten, die zu einem Drift der tatsächlichen Ist-Frequenz vi des Sendemittels 17 führen können. Um einen solchen Drift zu berücksichtigen, kann nachfolgend gelegentlich ein Frequenzabgleich zwischen den beiden Einrichtungen 4, 5 vorgenommen werden. Hierzu wird die tatsächliche Ist-Frequenz vi' des Sendemittels 17 in der zweiten Einrichtung 5 während des Betriebs des Schließsystems 3 neu ermittelt. Die neu ermittelte tatsächliche Ist-Frequenz vi' wird dann anstelle der bisherigen Ist-Frequenz vi im Speichermittel 25 der ersten Einrichtung 4 abgespeichert, wozu das Speichermittel 25 vorteilhafterweise als überschreibbarer Speicher ausgebildet ist. Der Frequenzabgleich erfolgt zweckmäßigerweise in periodischen Abständen. Beispielsweise kann der Frequenzabgleich bei der Inspektion des Kraftfahrzeugs 1, nach Ablauf einer festgelegten Betriebsdauer des Kraftfahrzeugs 1 o. dgl. vorgenommen werden.

Zu einer ersten Einrichtung 4 können mehrere zweite Einrichtungen 5 zugehörig sein, beispielsweise kann der Benutzer 2 zusätzlich einen in Fig. 2 gezeigten elektronischen Zweit- und/oder Ersatzschlüssel 5' besitzen. Die Ist-Frequenzen vi der Sendemittel 17 der verschiedenen zweiten Einrichtungen 5, 5' werden sich im allgemeinen voneinander unterscheiden. Es ist daher vorteilhaft, wenn die tatsächliche Ist-Frequenz vi der zweiten Einrichtung 5' ebenfalls im Speichermittel 25 der ersten Einrichtung 4 abgespeichert ist. Zweckmäßigerweise können die jeweiligen tatsächlichen Ist-Frequenzen vi der zugehörigen zweiten Einrichtungen 5, 5' im Speichermittel 25 der ersten Einrichtung 4 in der Art einer Tabelle abgespeichert sein.

Um die Vorteile der abgespeicherten Ist-Frequenzen vi auszuschöpfen bietet sich folgende Arbeitsweise für das Schließsystem 3 an. Bei Beginn der Signal-Übertragung von der zweiten Einrichtung 5 auf die erste Einrichtung 4, beispielsweise bei Übertragung des Rückantwortsignals 14 und/oder des Betriebssignals 15, werden dann zunächst im Empfangsmittel 21 der ersten Einrichtung 4 die gespeicherten Ist-Frequenzen vi für die Sendemittel 17 der zugehörigen zweiten Einrichtungen 5, 5' nacheinander eingestellt. Im Falle daß eine zugehörige zweite Einrichtung 5, 5' erkannt wird, wird die Signal-Übertragung mit der dann im Empfangsmittel 21 der ersten Einrichtung 4 eingestellten Ist-Frequenz vi fortgesetzt. Im Falle daß keine zugehörige zweite Einrichtung 5, 5' erkannt wird, wird anschließend das gesamte Frequenzband [va,vb] nach einer zugehörigen zweiten Einrichtung 5, 5' durchsucht. Der letztgenannte Fall kann aufgrund eines noch nicht berücksichtigten Drifts der Bauteile des Sendemittels 17 in der zweiten Einrichtung 5, bei einem nachträglich dem Schließsystem 3 hinzugefügten Ersatzschlüssel 5' o. dgl. auftreten. Durch diese Maßnahme ist auch im letztgenannten Fall die Funktionsfähigkeit des Schließsystems 3, wenn auch mit vergrößertem Zeitbedarf, gegeben. In einem solchen Fall bietet es sich dann jedoch an, den bereits beschriebenen Frequenzabgleich baldmöglichst vorzunehmen.

Die Erfindung ist nicht auf das beschriebene und dargestellte Ausführungsbeispiel beschränkt. Sie umfaßt vielmehr auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: Signal / Wecksignal
- 13:: Signal / Bereichsabgrenzungssignal
- 14:: Signal / Rückantwortsignal
- 15:: Signal / (codiertes) Betriebssignal
- 16:: Türgriff
- 17:: Sendemittel (zweite Einrichtung)
- 18:: Empfangsmittel (zweite Einrichtung)
- 19:: Logikschaltung (zweite Einrichtung)
- 20:: Sendemittel (erste Einrichtung)
- 21:: Empfangsmittel (erste Einrichtung)
- 22:: Innenraum (von Kraftfahrzeug)
- 23:: Außenraum (von Kraftfahrzeug)
- 24:: Logikschaltung (erste Einrichtung)
- 25:: Speichermittel

## Patentansprüche

1. Schließsystem, insbesondere für die Zugangs- und/oder Fahrberechtigung bei einem Kraftfahrzeug (1) gegebenenfalls in der Art einer Keyless Entry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung beispielsweise der Autotüren (6) und/oder des Zündschlosses (9) und/oder der Lenkradverriegelung (10), zur Freigabe und/oder Sperrung beispielsweise der Wegfahrsperre und/oder des Motorsteuergeräts o. dgl., und mit einer zugehörigen, in der Art eines elektronischen Schlüssels, eines ID-Gebers, einer Chipkarte o. dgl, ausgebildeten zweiten Einrichtung (5), wobei die beiden Einrichtungen (4, 5) zu deren bestimmungsgemäßen Betrieb Sendemittel (17, 20) und/oder Empfangsmittel (18, 21) für elektromagnetische Signale (7) mit in einem Frequenzband zwischen zwei Grenzfrequenzen ([*v*a, *v*b]) liegenden Frequenzen (*v*) besitzen, und wobei es sich insbesondere bei wenigstens einem der zwischen der zweiten Einrichtung (5) und der ersten Einrichtung (4) übertragenen Signale (7) um ein codiertes Betriebssignal (15) zur Authentikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist, **dadurch gekennzeichnet, dass** die Ist-Frequenz (*v*i), mit der das Sendemittel (17) der zweiten Einrichtung (5) betrieben wird, bei der Initialisierung des Schließsystems (3) ermittelt und in einem Speichermittel (25) der ersten Einrichtung (4) abgespeichert ist, und dass die Ist-Frequenz (*v*i) in der ersten Einrichtung (4) zur Signal-Übertragung eingestellt wird, derart dass sich ein Durchsuchen des Frequenzbandes ([*v*a, *v*b]) erübrigt.

2. Schließsystem nach Anspruch 1, **dadurch gekennzeichnet, dass** die Ist-Frequenz (*v*i) des Sendemittels (17) in der zweiten Einrichtung (5) bei der erstmaligen Authentikation der zweiten Einrichtung (5) ermittelt und abgespeichert wird.

3. Schließsystem nach Anspruch 1 oder 2, **dadurch gekennzeichnet, dass** die Ist-Frequenz (*v*i) des Sendemittels (17) in der zweiten Einrichtung (5) während des Betriebs des Schließsystems (3) neu ermittelt wird, insbesondere in periodischen Abständen, beispielsweise bei der Inspektion des Kraftfahrzeugs (1), nach Ablauf einer festgelegten Betriebsdauer des Kraftfahrzeugs (1) o. dgl., und dass die neu ermittelte Ist-Frequenz (*v*i) anstelle der bisherigen Ist-Frequenz (*v*i) im Speichermittel (25) der ersten Einrichtung (4) abgespeichert wird.

4. Schließsystem nach Anspruch 1, 2 oder 3, **dadurch gekennzeichnet, dass** zu einer ersten Einrichtung (4) mehrere zweite Einrichtungen (5, 5') zugehörig sind und dass die jeweiligen Ist-Frequenzen (*v*i) der zugehörigen zweiten Einrichtungen (5, 5') im Speichermittel (25) der ersten Einrichtung (4), insbesondere in der Art einer Tabelle, abgespeichert sind.

5. Schließsystem nach einem der Ansprüche 1 bis 4, **dadurch gekennzeichnet, dass** bei Beginn der Signal-Übertragung von der zweiten Einrichtung (5) auf die erste Einrichtung (4) zunächst im Empfangsmittel (21) der ersten Einrichtung (4) die gespeicherten Ist-Frequenzen vi für die Sendemittel (17) der zugehörigen zweiten Einrichtungen (5) nacheinander eingestellt werden, wobei im Falle dass eine zugehörige zweite Einrichtung (5) erkannt wird die Signal-Übertragung mit der dann im Empfangsmittel (21) der ersten Einrichtung (4) eingestellten Ist-Frequenz vi fortgesetzt wird, und wobei im Falle dass keine zugehörige zweite Einrichtung (5) erkannt wird anschließend das gesamte Frequenzband ([*v*a, *v*b]) nach einer zugehörigen zweiten Einrichtung (5) durchsucht wird.

6. Schließsystem nach einem der Ansprüche 1 bis 5, **dadurch gekennzeichnet, dass** das Speichermittel (25) zur Abspeicherung der Ist-Frequenz (*v*i) als nichtflüchtiger sowie gegebenenfalls überschreibbarer Speicher, insbesondere als EEPROM, Flashspeicher o. dgl., ausgebildet ist.

## Claims

1. Locking system, in particular for access and/or drive authorisation in a motor vehicle (1) possibly In the manner of a keyless entry/go functionality, comprising a first device (4) having at least two states and designed as a control device, such as a control device for unlocking and/or locking for example the vehicle doors (6) and/or the ignition lock (9) and/or the steering wheel lock (10), for releasing and/or locking for example the immobiliser and/or the engine control device or the like, and an associated second device (5) designed in the manner of an electronic key, an ID-generator, a chip card or the like, wherein the two devices (4, 5) for their intended operation have transmission means (17, 20) and/or receiving means (18, 21) for electromagnetic signals (7) with frequencies (v) in a frequency band between two limit frequencies ([va, vb]), and wherein in particular In at least one of the signals (7) transmitted between the second device (5) and the first device (4) there is a coded operating signal (15) for authentication of the second device (5), so that after a positive evaluation of the transmitted operating signal (15) in an authorised second device (5) a change in the state of the first device (4) can be achieved, **characterised in that** the actual frequency (vi), at which the transmission means (17) of the second device (5) Is operated, is ascertained during the initialisation of the locking system (3) and saved in a storage means (25) of the first device (4), and **in that** the actual frequency (vi) in the first device (4) is adjusted for signal transmission such that it Is unnecessary to search through the frequency band ([va, vb]).

2. Locking system according to claim 1, **characterised in that** the actual frequency (vi) of the transmission means (17) is determined and stored in the second device (5) at the first authentication of the second device (5).

3. Locking system according to claim 1 or 2, **characterised in that** the actual frequency (vi') of the transmission means (17) is newly determined in the second device (5) during the operation of the locking system (3), in particular at periodic intervals, for example during the inspection of the vehicle (1), after the expiry of a defined operating period of the motor vehicle (1) or the like, and **In that** the newly determined actual frequency (vi') is stored in the storage means (25) of the first device (4) instead of the previous actual frequency (vi).

4. Locking system according to claim 1, 2 or 3, **characterised in that** a plurality of second devices (5, 5') are associated with a first device (4), and **in that** the respective actual frequencies (vi) of the associated second devices (5, 5') are stored in the storage means (25) of the first device (4), In particular in the form of a table.

5. Locking system according to one of claims 1 to 4, **characterised in that** at the start of the transmission of signals from the second device (5) to the first device (4), the stored actual frequencies (vi) for the transmission means (17) of the associated second devices (5) are firstly set In succession in the receiving means (21) of the first device (4), wherein if an associated second device (5) is identified, the transmission of signals is continued with the actual frequency (vi) which is then set in the receiving means (21) of the first device (4), and wherein if no associated second device (5) is identified, afterwards the entire frequency band ([va, vb]) is searched through for an associated second device (5).

6. Locking system according to one of claims 1 to 5, **characterised in that** the storage means (25) for storing the actual frequency (vi) is designed as a non-volatile memory and if necessary as a rewritable memory, in particular an EEPROM, flash memory or the like.

## Revendications

1. Système de verrouillage, notamment pour l'autorisation d'accès et/ou de conduite d'un véhicule automobile (1), le cas échéant sous la forme d'une fonction entrée/marche sans clé, comportant :
- une première installation (4) en forme d'installation de commande ayant au moins deux états, telle qu'une installation de commande de déverrouillage et/ou de verrouillage, par exemple des portières de voiture (6) et/ou de la serrure de contact (9) et/ou du verrouillage du volant (10) pour libérer et/ou verrouiller, par exemple le verrou d'immobilisation et/ou l'appareil de commande du moteur ou analogue, et
- une seconde installation (5), correspondante, sous la forme d'une clé électronique, d'un générateur ID, d'une carte à puce ou analogue,
* les deux installations (4, 5) ayant pour leur fonctionnement tel que défini, des moyens d'émission (17, 20) et/ou de réception (18, 21) pour des signaux électromagnétiques (7) avec des fréquences (v), situées dans une bande de fréquence comprise entre deux fréquences limites (va, vb), et
* en particulier, au moins un des signaux (7) échangés entre la seconde installation (5) et la première installation (4), est un signal de fonctionnement (15), codé, pour authentifier la seconde installation (5) de façon qu'après l'exploitation positive du signal de fonctionnement (15), transmis, pour la seconde installation (5), autorisée, produire une variation de l'état de la première installation (4),
système **caractérisé en ce que**
- la fréquence réelle (vi) avec laquelle fonctionne le moyen d'émission (17) de la seconde installation (5) est déterminée à l'initialisation du système de verrouillage (3) et elle est enregistrée dans une mémoire (25) de la première installation (4), et
- la fréquence réelle (*v*i) est réglée dans la première installation (4) pour la transmission du signal de façon à rendre inutile le balayage de la bande de fréquence (va, vb).

2. Système de verrouillage selon la revendication 1,
**caractérisé en ce que**
la fréquence réelle (vi) du moyen d'émission (17) de la seconde installation (5) est déterminée et enregistrée lors de la première authentification de la seconde installation (5).

3. Système de verrouillage selon la revendication 1 ou 2,
**caractérisé en ce que**
- la fréquence réelle (vi) du moyen d'émission (17) est déterminée à nouveau dans la seconde installation (5) pendant le fonctionnement du système de verrouillage (3), notamment à des intervalles périodiques, par exemple lors de la révision du véhicule automobile (1), après une durée de fonctionnement fixée du véhicule automobile (1) ou analogue, et
- la nouvelle fréquence réelle (vi') ainsi obtenue est enregistrée dans la mémoire (25) de la première installation (4) à la place de la fréquence réelle (vi) utilisée jusqu'alors.

4. Système de verrouillage selon les revendications 1, 2 ou 3,
**caractérisé en ce que**
- plusieurs secondes installations (5, 5') sont associées à une première installation (4), et
- les fréquences réelles respectives (vi) des secondes installations correspondantes (5, 5') sont enregistrées dans une mémoire (25) de la première installation (4), notamment sous la forme d'un tableau.

5. Système de verrouillage selon l'une des revendications 1 à 4,
**caractérisé en ce qu**'
- au début de la transmission du signal par la seconde installation (5) vers la première installation (4), tout d'abord dans le moyen de réception (21) de la première installation (4), on règle les fréquences réelles (vi) enregistrées en mémoire pour les moyens d'émission (17) des secondes installations (5) correspondantes, successivement,
- si une seconde installation (5) correspondante est reconnue, la transmission du signal avec la fréquence réelle (vi) réglée alors dans le moyen de réception (21) de la première installation (4) se poursuit, et
- si aucune seconde installation (5) n'est reconnue, on balaie ensuite toute la plage de fréquence (va, vb) pour trouver une seconde installation (5) correspondante.

6. Système de verrouillage selon l'une des revendications 1 à 5,
**caractérisé en ce que**
la mémoire (25) pour enregistrer la fréquence réelle (vi) est une mémoire non volatile et le cas échéant, une mémoire réinscriptible, notamment une mémoire EEPROM, une mémoire flash ou une mémoire de ce type.
